# EUROPEAN PATENT APPLICATION

(11) **EP 3 244 284 A1**
(43) Date of publication of application: **15.11.2017**
(21) Application number: 15877173.3
(22) Date of filing: 16.11.2015
(51) Int. Cl.: G06F 1/20, G06F 1/26

(54) **COMPUTER POWER SUPPLY DEVICE HAVING FAN CONTROL CIRCUIT FOR COOLING STANDBY POWER SOURCE UNIT IN STATE IN WHICH COMPUTER IS TURNED OFF, AND OPERATING METHOD**

(30) Priority: 09.01.2015 KR 20150003422
(71) Applicant: Hanmi Micronics Co., Ltd, Geumcheon-gu, Seoul 08513 (KR)
(72) Inventor: KIM, Byung-Ho, Seoul 01784 (KR); PARK, Hyeng-Hwa, Seoul 04369 (KR)
(74) Representative: advotec.
(86) International application number: PCT/KR2015/012257
(87) International publication number: WO 2016/111453

(57) **Abstract**

The present invention relates to a computer power supply device having a fan control circuit for cooling a standby power source unit in a state in which a computer is turned off and comprises: a power source unit for providing power to each part included in a computer main body while generating main power and standby power; a cooling control circuit; and a detection sensor. The present invention has an advantage of reducing the durability deterioration of parts included in the computer main body according to heating of the parts by driving a fan by means of the standby power of the power source unit so as to decrease the temperature or the current of the parts to a predetermined value or less if the temperature or the current of the parts increases to the predetermined value or more when an operation of the computer stops, thereby preventing a reduction in the durability and lifespan of the parts.

## Description

### [Technical Field]

The present invention relates to a computer power supply device having a fan control circuit for cooling a standby power unit in the state in which a computer is off and an operation method of the same, and more particularly, to a computer power supply device having a fan control circuit for cooling a standby power unit in the state in which a computer is off, wherein the computer power supply device senses a temperature or current in computer parts in a standby state, which is a state in which the computer is off, or immediately after the operation of the computer is stopped, and drives a fan using a standby power flowing in the power unit to smoothly dissipate heat generated in the computer to the outside when a temperature or current in computer parts is equal to or greater than a predetermined value set by a user while the standby power is being used to charge a mobile phone connected to the computer with electricity or while the standby power is maintained immediately after the computer is turned off or in the state in which the computer is off, thereby improving the durability of the computer, and an operation method of the same.

### [Background Art]

In general, in order to prevent a decrease in the lifespan of parts due to heat generated when an apparatus, such as a computer, is operated, a fan is mounted in the apparatus. When heat is generated as the apparatus is operated, the fan is operated depending on the temperature of the heat generated in the apparatus to rapidly dissipate the heat generated in the apparatus, which is disclosed in Korean Utility Model Registration No. 20-0304192.

### [Disclosure]

### [Technical Problem]

As described above, the fan is operated depending on a temperature set by the user. However, the fan is rotated to dissipate heat only in the state in which the apparatus, such as the computer, is operated as power is supplied to the computer. That is, when the operation of the computer is stopped, the fan mounted in the computer is not operated. In the state in which the computer is off, therefore, heat is not sufficiently dissipated, whereby the durability of parts is reduced and thus the lifespan of the parts is shortened.

### [Technical Solution]

It is an object of the present invention to provide a computer power supply device having a fan control circuit for cooling a standby power unit in the state in which a computer is off, the computer power supply device including a power unit for generating a main power and a standby power and supplying power to respective parts included in a main body of the computer and a cooling control circuit connected to the standby power of the power unit for measuring temperature or current in the respective parts included in the main body of the computer, comparing the measured temperature or current with a value set by a user, and driving a fan using the standby power of the power unit to reduce the value of temperature or current in the respective parts included in the main body of the computer only in the case in which the measured temperature or current is equal to or greater than the value set by the user, wherein, if a temperature or current in the respective parts included in the main body of the computer becomes equal to or greater than a predetermined value when the operation of the computer is stopped, the computer power supply device drives the fan using the standby power of the power unit such that the temperature or current in the respective parts included in the main body of the computer is less than the predetermined value, thereby reducing a decrease in the durability of the parts due to heat generated in the parts and thus preventing a reduction in the lifespan of the parts.

It is another object of the present invention to configure the computer power supply device in such a manner that the standby power is usable even when the operation of the computer is stopped, whereby a portable terminal, such as a mobile phone, is capable of being connected to the main body of the computer such that the portable terminal can be conveniently charged with electricity, and the fan is driven using the standby power such that temperature and current in the computer parts is conveniently reduced even when the temperature and current in the computer parts rises due to the use of the standby power.

### [Advantageous Effects]

The present invention has the effect that, if the temperature or current in the respective parts included in the main body of the computer becomes equal to or greater than a predetermined value when the operation of the computer is stopped, the computer power supply device drives the fan using the standby power of the power unit such that temperature or current in the respective parts included in the main body of the computer is less than the predetermined value, thereby reducing a decrease in the durability of the parts due to heat generated in the parts and thus preventing a reduction in the lifespan of the parts.

In addition, the present invention has the effect that the standby power is usable even when the operation of the computer is stopped, whereby a portable terminal, such as a mobile phone, is connected to the main body of the computer such that the portable terminal can be conveniently charged with electricity, and it is possible to drive the fan using the standby power, which has relatively low voltage, thereby reducing the amount of electricity that is used and thus reducing power costs.

### [Description of Drawings]

FIG. 1 is a block diagram showing an embodiment of the present invention; and
FIG. 2 is a flowchart showing an operation method of the present invention.

### * Description of Reference Numerals *

11: Main power 12: Standby power
13: Power unit 14: Cooling control circuit
15: Sensor
10: Computer power supply device having fan control circuit for cooling standby power unit in state in which computer is off

### [Best Mode]

A description will be given of the construction of the present invention to accomplish the above objects.

Hereinafter, the construction of the present invention will be described in detail with reference to the accompanying drawings.

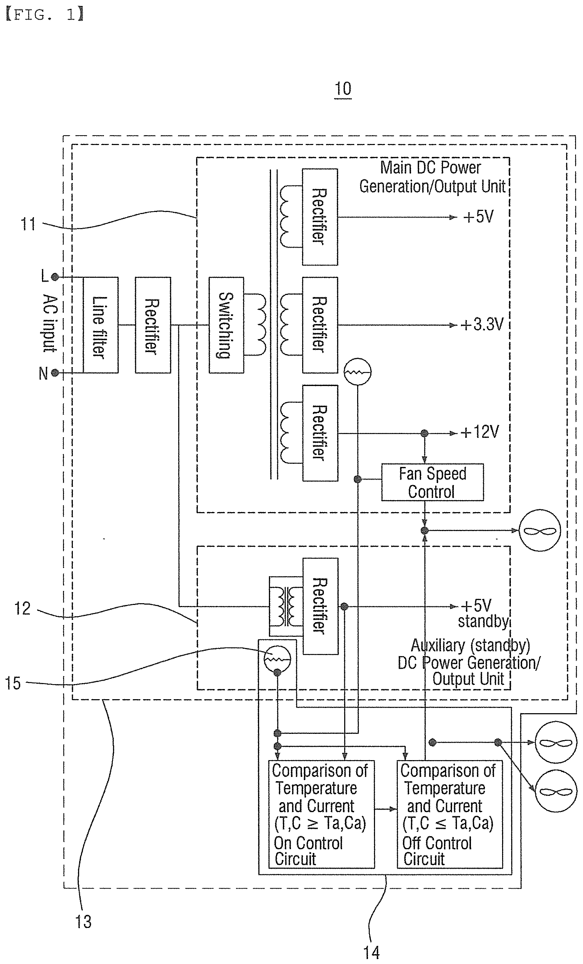

As shown in FIG. 1, a computer power supply device 10 having a fan control circuit for cooling a standby power unit in the state in which a computer is off according to the present invention includes a power unit 13, which is mounted in a main body of the computer, generates a main power 11 and a standby power 12 for operating the computer using electricity received from the outside, and supplies power to respective parts included in the main body of the computer.

The main power 11 is a general power used to operate the computer (not shown), and the standby power 12 is electricity flowing in the main body of the computer even in the state in which the computer is not turned on, the same being generally utilized in electric products, and therefore a detailed description thereof will be omitted.

Furthermore, the standby power 12 is configured to have lower voltage than the main power 11.

It is obvious that the power unit 13 is mounted in the main body of the computer, and therefore a detailed description thereof will be omitted.

In addition, it is obvious that a memory (not shown), a main board (not shown), a central processing unit (not shown), a fan (not shown), an interface (not shown), etc. are mounted in the main body of the computer in order to operate the computer, and therefore a detailed description thereof will be omitted.

Furthermore, it is obvious that a button (not shown), a liquid crystal display unit (not shown), etc. for allowing a user to set values of temperature and current in the computer parts are provided, and therefore a detailed description thereof will be omitted.

The computer power supply device further includes a cooling control circuit 14, which is connected to the standby power 12 of the power unit 13, measures a temperature or current in the respective parts included in the main body of the computer, compares the measured temperature or current in the respective parts with the value set by the user, and drives the fan using the standby power 12 to reduce the value of the temperature or current in the respective parts included in the main body of the computer only in the case in which the measured value of temperature or current in the respective parts is equal to or greater than the value set by the user.

A sensor 15 for sensing the amount of current introduced into the cooling control circuit 14, which is connected to the standby power 12 of the power unit 13, or sensing the temperature of the cooling control circuit 14 may be connected to the cooling control circuit 14.

It is obvious that the user can select any sensor that is generally used, such as a temperature sensor, a current sensor, or a resistance sensor, as the sensor 15 depending on the purpose of use, and therefore a detailed description thereof will be omitted.

Furthermore, in the present invention, it is considered that the power unit 13, the cooling control circuit 14, and the sensor 15 are computer parts.

An operation method of the computer power supply device with the above-stated construction according to a preferred embodiment of the present invention will be described below.

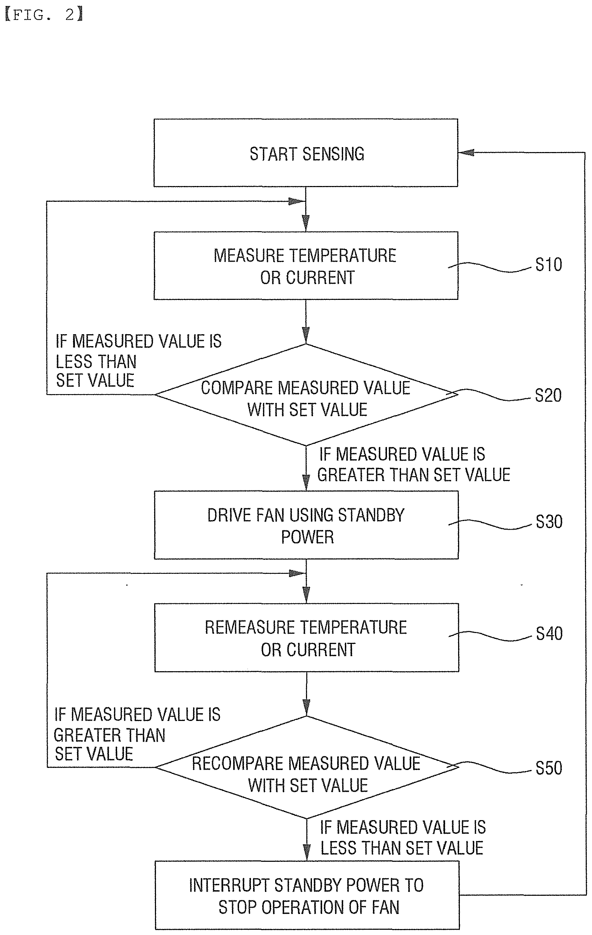

First, as shown in FIG. 2, the sensor 15, which is connected to the cooling control circuit 14, continuously senses the temperature of the parts in the main body of the computer or the cooling control circuit 14 or the amount of current flowing in the parts in the main body of the computer or the cooling control circuit 14.

Specifically, the sensor 15, which is connected to the cooling control circuit 14, senses the computer parts, including the cooling control circuit 14, in the state in which the main power 11 of the power unit 13 is interrupted such that the computer is turned off but the standby power 12 flows.

Furthermore, the sensor 15 continuously performs the sensing operation, as described above, even immediately after the main power 11 of the power unit 13 is interrupted such that the computer is turned off according to the user's purpose during the operation of the computer using the main power 11.

It is obvious that the user first sets desired temperature and current values using the button, provided on the main body of the computer, and therefore a detailed description thereof will be omitted (S10).

Subsequently, the sensor 15 senses the value of temperature or current in the computer parts, including the cooling control circuit 14, and compares the measured value of temperature or current with the temperature or current value set by the user. In the case in which the value measured by the sensor 15 is less than the value set by the user, the sensor 15 continuously senses the temperature or current in the computer parts while the current state is maintained without the standby power 12 being supplied to the fan (S20).

On the other hand, in the case in which the value measured by the sensor 15 is greater than the value set by the user, the cooling control circuit 14 operates the standby power 12 of the power unit 13 such that the standby power 12 is supplied to the fan in order to drive the fan.

As the result of driving the fan, the temperature of the parts included in the main body of the computer goes down, or the value of current in the parts becomes less than the value set by the user (S30).

As the fan is driven by the standby power 12, the temperature or the value of current in the computer parts is changed, as described above, and the sensor 15 remeasures the values of temperature and current in the computer parts (S40).

In the case in which the temperature or current value remeasured by the sensor 15 is less than the set value, the standby power 12 is interrupted to stop the driving of the fan that has been operated by the standby power 12, and the sensor 15 continuously senses temperature and current in the computer parts.

On the other hand, in the case in which the temperature or current value remeasured by the sensor 15 is greater than the set value, the standby power 12 is maintained to continuously drive the fan such that the value measured by the sensor remains less than the value set by the user.

As described above, the sensor 15 continuously measures the temperature and current in the computer parts, and the cooling control circuit 13 controls the driving of the fan using the standby power 12, thereby controlling the computer parts.

In addition, the above operation is continuously performed by the cooling control circuit 14 and the sensor 15 (S50).

As described above, the sensor 15, which is connected to the cooling control circuit 14, drives the fan using the standby power 12 to dissipate heat generated from the computer parts to the outside while continuously sensing temperature and the amount of current, thereby maximally preventing the reduction in durability of the computer parts.

That is, temperature or current in the computer parts and heat generated from the computer parts is sensed by the sensor 15, even immediately after the computer is turned off during the operation of the computer, thereby preventing the reduction in durability of the computer parts due to heat. Since the fan is driven using only the standby power 12 without using the main power 11, the reduction in durability of the computer parts due to heat is prevented, thereby reducing power costs.

Meanwhile, in the case in which a terminal, such as a mobile phone, possessed by the user is connected to the computer via a universal serial bus (USB) cable in order to charge the terminal with electricity in the state in which the computer is off, the computer parts may be operated due to the user of the standby power 12, with the result that the temperature or current in the computer parts may rise. Even at this time, the sensor 15 continuously senses the value of temperature or current in the cooling control circuit 14 or the computer parts. When the sensed temperature or current value exceeds the value set by the user, the cooling control circuit 14 is operated, as described above, in order to prevent an increase in the temperature or the current.

Since it is possible to drive the fan using the standby power 12, which has lower voltage than the main power 11, as described above, the amount of electricity that is used is reduced, thereby reducing power costs.

In addition, since it is possible to drive the fan using the standby power 12, which has relatively low voltage, even when the operation of the computer is stopped due to interruption of the main power 11 during the operation of the computer, the amount of electricity that is used is reduced, thereby reducing power costs.

Although the invention has been described with reference to the preferred embodiments, the present invention is not limited to the embodiments. It is obvious to those skilled in the art to which the present invention pertains to that various modifications can be made in the present invention without departing from the technical concept of the present invention.

## Claims

1. A computer power supply device having a fan control circuit for cooling a standby power unit in a state in which a computer is off, the computer power supply device comprising: a power unit (13) for generating a main power (11) and a standby power (12) and supplying power to respective parts in a main body of the computer; a cooling control circuit (14) connected to the standby power (12) of the power unit (13) for measuring temperature or current in the respective parts in the main body of the computer, comparing the measured temperature or current with a value set by a user, and driving a fan using the standby power (12) of the power unit (13) to reduce a value of temperature or current in the respective parts in the main body of the computer only in a case in which the measured temperature or current is equal to or greater than the value set by the user; and a sensor (15) connected to the cooling control circuit (14), which is connected to the power unit (13), for continuously sensing the value of the temperature or current in the computer parts even in a state in which the main power (11) of the power unit (13) is interrupted such that the computer is turned off.

2. An operation method of a computer power supply device having a fan control circuit for cooling a standby power unit in a state in which a computer is off, the computer power supply device comprising a power unit mounted in a main body of the computer, the power unit comprising a main power and a standby power, a cooling control circuit connected to the power unit for measuring a temperature or a current in computer parts to reduce the temperature or the current so as to be equal to or less than a predetermined value, and a sensor connected to the cooling control circuit for measuring a temperature or a current, wherein the operation method comprises:
a sensing step (S10) of the sensor, connected to the cooling control circuit, continuously sensing a value of the temperature or the current in the computer parts even in a state in which the main power of the power unit is interrupted such that the computer is turned off;
a comparison step (S20) of comparing the value of the temperature or the current in the computer parts sensed at the sensing step (S10) with a value set by a user and continuously sensing the temperature or the current in the computer parts in a case in which the value measured by the sensor is less than the set value;
a driving step (S30) of driving a fan using the standby power of the power unit to reduce the temperature or current in the computer parts through the fan in a case in which the value measured by the sensor is greater than the set value at the comparison step (S20);
a resensing step (S40) of the sensor, connected to the cooling control circuit, remeasuring a current value of temperature or current in the computer parts when the fan is driven using the standby power at the driving step (S30); and
a continuous sensing step (S50) of interrupting the standby power to stop the driving of the fan and the sensor continuously sensing temperature or current in the computer parts in a case in which the value measured at the resensing step (S40) is less than the set value and continuously supplying the standby power to the fan to drive the fan such that the temperature or current in the computer parts is reduced in a case in which the value measured by the sensor is greater than the set value.
